# Europäisches Patentamt

# European Patent Office

# Office européen des brevets

(19)

(11) Veröffentlichungsnummer: **0 034 577**
**B1**

(12) **EUROPÄISCHE PATENTSCHRIFT**

(45) Veröffentlichungstag der Patentschrift:
08.06.83

(21) Anmeldenummer: 81850026.6

(22) Anmeldetag: 17.02.81

(51) Int. Cl.³: **B 23 K 35/06,** B 23 K 9/12,
B 23 K 9/04

(54) Schweisskopf für Bandelektroden.

(30) Priorität: 19.02.80 SE 8001299

(43) Veröffentlichungstag der Anmeldung:
26.08.81 Patentblatt 81/34

(45) Bekanntmachung des Hinweises auf die Patenterteilung:
08.06.83 Patentblatt 83/23

(84) Benannte Vertragsstaaten:
AT BE DE FR GB IT NL

(56) Entgegenhaltungen:
**Cited Documents (56):**
**FR-A-2 074 129**
**GB-A-772 387**
**GB-A-1 013 259**
**GB-A-1 332 915**
**US-A-2 366 068**
**US-A-2 900 489**
**US-A-3 936 654**

(73) Patentinhaber: **ESAB Aktiebolag,**
**Box 8004 Herkulesgatan 72, S-402 77 Göteborg (SE)**

(72) Erfinder: **Malm, Anders Lennart, Hökstigen 9,**
**S-695 00 Laxa/SE (SE)**

(74) Vertreter: **Frisch, Kurt, c/o ESAB AB Box 8004,**
**Herkulesgatan 72 S-402 77 Göteborg (SE)**

ACTORUM AG

## Schweisskopf für Bandelektroden

Die Erfindung bezieht sich auf einen Schweisskopf mit einer Vorschubeinheit mit zylindrischen Rollen für den Vorschub von zumindest einer Bandelektrode durch eine Kontakteinrichtung für die Überführung von Schweissstrom zur Bandelektrode.

Schweissköpfe dieser Art werden beispielsweise beim Auftragsschweissen verwendet. Das Verhältnis Breite:Dicke bei diesen Bandelektroden liegt zwischen 300 : 1 und 10 : 1. Eine häufig verwendete Banddimension ist 60 × 0,5 mm. Die Bandelektroden bestehen aus verschiedenen Legierungen um eine gewünschte Zusammensetzung des Auftragsschweissgutes zu erhalten. Eine oder mehrere Bandelektroden werden von einem Bandvorrat mittels einer Vorschubeinrichtung zu einer Kontakteinrichtung vorgeschoben, in der der Schweissstrom von einem an den einen Pol einer Schweissstromquelle angeschlossenen Kontaktstück an die Bandelektrode überführt wird. Der andere Pol der Schweissstromquelle ist auf bekannte Weise mit dem Arbeitsstück verbunden, das mit einer Auftragsschweissung versehen werden soll.

Bekannte Schweissköpfe der eingangs erwähnten Gattung sind mit Kontaktbacken versehen, die mittels Federkraft an die Bandelektroden angepresst werden. Bei einem bekannten Schweisskopf, der für mehrere Bandelektroden vorgesehen ist (GB-A-1 332 915), die sich zumindest mit einem Teil ihrer Breitseiten überlappen, ist vorgeschlagen worden, zwischen den Bandelektroden Kontaktteile anzubringen und den notwendigen Kontaktdruck mit Federdruckrollen zu erzeugen.

In der GB-A-772 387 wird vorgeschlagen, die Peripherie der Vorschubrollen V-förmig auszuführen, um die Bandelektrode bei der Passage der Vorschubrollen entsprechend zu deformieren. Diese deformierte Bandelektrode wird dann durch eine Kontakteinrichtung geführt, wo sie allseitig von Kontaktbacken umschlossen wird.

In der US-A-3 936 654 wird eine Vorschubeinrichtung beschrieben, in der mit Hilfe besonders ausgeführter Vorschubrollen die Bandelektrode wellenförmig derart deformiert wird, dass sie einen wellenförmigen Querschnitt erhält. Die Bandelektrode passiert danach federbelastete Kontaktbacken für die Überführung des Schweissstromes.

In der US-A-2 366 068 wird eine Kontakteinrichtung für eine Rundelektrode beschrieben, die keine beweglichen Kontaktteile aufweist. Die Rundelektrode wird durch eine Formbacke quer zur Vorschubeinrichtung elastisch aus der geraden Vorschubrichtung herausgebogen. Aufgrund der elastischen Verformung strebt die Rundelektrode danach die gerade Richtung wieder einzunehmen und presst sich dabei an eine feste in der Vorschubrichtung angebrachte Kontaktbacke an.

Diese Kontakteinrichtung ist für Bandelektroden nicht geeignet, da durch eine elastische Verformung der relativ dünnen – normalerweise ca 0,5 mm dicken – Bandelektroden quer zur Bandrichtung nur sehr geringe Federkräfte im Bandmaterial gespeichert werden können, die für die Erzeugung eines ausreichenden Kontaktdruckes zwischen Bandelektrode und Kontaktbacke nicht ausreichen.

Ausgehend von dieser Erkenntnis liegt der vorliegenden Erfindung die Aufgabe zugrunde, einen einfachen Schweisskopf für eine Bandelektrode zu schaffen, dessen Kontakteinrichtung keine beweglichen Kontaktteile besitzt und mit dem eine einwandfreie Stromüberführung zur Bandelektrode gewährleistet werden kann.

Die Aufgabe wird erfindungsgemäss dadurch gelöst, dass die Kontakteinrichtung mit einem Kontaktstück, das eine rinnenförmige Bandführung für die Bandelektrode besitzt, und mit einer gegenüber der Bandführung und im Abstand von dieser angebrachten, an der Bandelektrode anliegenden Formbacke versehen ist, die im Zusammenwirken mit der Bandführung die von der Vorschubeinheit in ebener Form vorgeschobene Bandelektrode bei Passage der Bandführung zu einer in der Bandführung anliegenden, mit der Längsachse der Bandelektrode gleichlaufenden Rinne verformt, wobei die Rinnenform der Bandführung und der genannte Abstand derart bemessen sind, dass die Verformung der Bandelektrode um ihre Längsachse elastisch ist.

Dank der elastischen Verformung der Bandelektrode im Bereich des Kontaktstückes wirkt die Bandelektrode als Feder, die durch ihr Bestreben die ebene Bandform wieder einzunehmen, den erforderlichen Kontaktdruck auf das Kontaktstück ausübt. Zufolge der gewölbten Form der Bandelektrode ist auch deren seitliche Führung gesichert.

Gemäss einer vorteilhaften Ausführungsform der Erfindung ist die Formbacke bezüglich der Bandführung symmetrisch angebracht und liegt im wesentlichen linienförmig in Richtung der Bandführung an der Bandelektrode an. Durch das linienförmige Anliegen der Formbacke an der Bandelektrode werden die Reibungsverluste zwischen diesen beiden Teilen niedrig gehalten.

Die aus der Kontakteinrichtung austretende Bandelektrode behält die gewölbte Form auf der kurzen Strecke bis zu der gewöhnlich mit Schweisspulver überdeckten Schweissstelle bei. Während eine ebene, zur Schweissrichtung quergestellte Bandelektrode im Verlauf des Schweissens beim Durchfurchen des Schweisspulvers wegen ihres geringen Widerstandsmomentes im Bereich der Schweissstelle unkontrollierbar aus ihrer Vorschubrichtung gebogen wird, verbleibt die gewölbte Bandelektrode wegen des wesentlich höheren Widerstandsmomentes gegenüber dem Arbeitsstück unverändert in der gewünschten Stellung.

Bei einem Schweisskopf mit einer Vorschubeinrichtung für den Vorschub von zwei Bandelektroden, die sich mit ihren Breitseiten zumindest teilweise überlappen, ist gemäss einer bevorzugten Ausführungsform der Erfindung das Kontaktstück mit zwei parallelen, rinnenförmigen Bandführungen versehen, die mit ihren konvexen Seiten zueinander gewandt sind, und pro Bandführung ist eine Formbacke angebracht.

Das Auftragsschweissen mit Bandelektroden wird fast ausschliesslich mit unter Schweisspulver verdecktem Lichtbogen ausgeführt. Dabei lässt es sich kaum vermeiden, dass verstreute Schweisspulverpartikel von der Bandelektrode bis zum Kontaktstück mittransportiert werden und dort zwischen Bandelektrode und Kontaktstück zu liegen kommen, wodurch die Kontaktgabe zwischen Kontaktstück und Bandelektrode ungünstig beeinflusst wird.

Gemäss einer bevorzugten Ausführungsform der Erfindung wird daher vorgeschlagen, das Kontaktstück im Bereich der Bandführung mit einem Kanal zu versehen, der sich bis zu einer Öffnung ausserhalb der Bandführung erstreckt. Pulverpartikel, die zwischen Bandelektrode und Kontaktstück eingeschleppt werden, wandern beim Vorschub der Bandelektrode in den Kanal und durch diesen nach aussen. Nach der Passage des Kanals durch die Bandelektrode ist ein einwandfreier Kontakt zwischen Bandelektrode und Kontaktblock sichergestellt.

Weitere vorteilhafte Ausführungsformen des Schweisskopfes gemäss der Erfindung ergeben sich aus der nachfolgenden Beschreibung und dem Hinweis auf die beigefügte Zeichnung, die ein Ausführungsbeispiel darstellt.

Fig. 1 zeigt einen Bandschweisskopf. Fig. 2 ist ein Schnitt längs II–II in Fig. 1 und Fig. 3 ist ein Schnitt längs III–III in Fig. 1.

Fig. 4 zeigt ein Kontaktstück des Schweisskopfes. Fig. 5 ist eine modifizierte Ausführung eines Kontaktstückes und Fig. 6 ist ein Schnitt längs VI–VI in Fig. 5.

Fig. 7 ist eine andere modifizierte Ausführung eines Schweisskopfes.

Fig. 8 zeigt einen Schweisskopf für zwei Bandelektroden und Fig. 9 ist ein Schnitt längs IX–IX in Fig. 8.

Fig. 10 ist eine modifizierte Ausführung eines Schweisskopfes für zwei Bandelektroden. Fig. 11 zeigt einen Schnitt durch eine Formbacke.

Eine Vorschubeinheit für eine Bandelektrode 1 ist hier durch zwei zylindrische Rollen 2, 3 dargestellt , die die Bandelektrode zur Kontakteinrichtung 4 verschieben. Zumindest eine der Rollen 2, 3 ist auf bekannte Weise von einem hier nicht gezeigten Motor angetrieben.

Die Kontakteinrichtung besitzt ein beispielsweise aus Kupfer hergestelltes Kontaktstück 5. Mittels einer Schraubenklemme 6 ist das Kontaktstück an einen Schweissstromleiter anschliessbar, der das Kontaktstück mit dem einen Pol einer hier nicht dargestellten Schweissstromquelle verbindet. Der andere Pol der Schweissstromquelle ist mit dem ebenfalls nicht gezeigten Arbeitsstück verbunden.

Das Kontaktstück besitzt eine rinnenförmige Bandführung 7 für die Bandelektrode. Eine bezüglich der Rinne symmetrisch angebrachte Formbacke 8 wird mit Hilfe einer Schiene 9 und zwei im Kontaktstück 5 befestigten Schrauben 10 gegen die Bandelektrode 1 gedrückt. Die von den Rollen 2, 3 vorgeschobene ebene Bandelektroden 1 wird von der Formbacke 8 im Zusammenwirken mit dem Kontaktstück 5 zu einer Rinne gewölbt. Um die Verformung der Bandelektrode bei ihrem Eintritt in die Kontakteinrichtung 4 zu erleichtern, ist die den Rollen zugewandte Stirnseite des Kontaktstückes 5 mit einer abgeschrägten Fläche 11 versehen. Die Kantenbereiche der Bandelektrode laufen auf der abgeschrägten Fläche 11 auf, während der Mittelbereich der Bandelektrode von der Formbacke 8 gegen den tiefsten Teil der Bandführung 7 gehalten wird.

Die Bandführung 7 und der Abstand zwischen Formbacke 8 und Bandführung sind so bemessen, dass sich die Bandelektrode beim Aufgleiten längs der Fläche 11 im wesentlichen nur elastisch verformt und dabei in der Bandführung 7 des Kontaktstückes anliegt. Der genannte Abstand entspricht gewöhnlich der Dicke der Bandelektrode. Dank der elastischen Verformung strebt die Bandelektrode danach ihre ursprüngliche ebene Form wieder einzunehmen und übt daher einen Druck auf das Kontaktstück aus, der ausreicht um einen einwandfreien Kontakt zwischen Bandelektrode und Kontaktstück zu gewährleisten.

Im Kontaktstück ist eine pfeilförmige Nut 12 eingefräst, die, von der Spitze in der Mitte der Bandführung 7 ausgehend, in Vorschubrichtung gesehen schräg nach vorne zu Öffnungen in den Seiten des Kontaktstückes verläuft. Die Nut dient zur Aufnahme von Partikeln, z.B. Schweisspulverpartikeln, die durch die Bandelektrode zwischen diese und das Kontaktstück eingeschleppt worden sind. Beim Vorschub der Elektrode fallen diese Partikel in die Nut und gleiten in dieser zu den seitlichen Öffnungen im Kontaktstück.

Es ist hier noch zu erwähnen, dass bei Auftragsschweissungen mit Bandelektroden diese grundsätzlich im wesentlichen senkrecht von oben nach unten der Schweissstelle zugeführt wird.

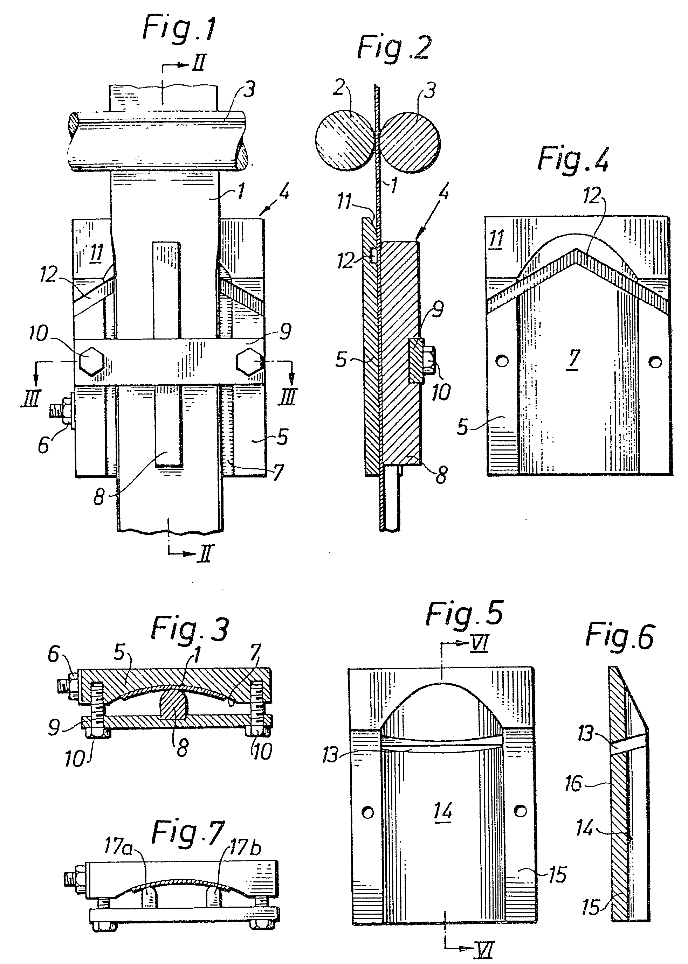

Eine etwas abgeänderte Form eines derartigen Reinigungskanals ist in Fig. 5 und Fig. 6 gezeigt. Hier ist als Kanal ein Schlitz 13 vorgesehen, der quer zur Bandführung 14 des Kontaktstückes 15 angebracht ist. Partikel, die von der Bandelektrode zwischen diese und das Kontaktstück eingeschleppt werden, fallen aus der Öffnung des Schlitzes auf der Rückseite 16 des Kontaktstückes 15 ins Freie.

Sollte sich zeigen, dass eine einzige Nut oder ein einziger Schlitz nicht ausreichen, um diese Partikel zu entfernen, können vorschlagsweise mehrere Nuten und/oder Schlitze in der Vorschubrichtung hintereinander angebracht werden.

Wenn die Bandelektrode aus der Kontakteinrichtung austritt, in der sie dank ihrer gewölbten Form seitlich genau geführt ist, behält sie ihre gewölbte Form bis zu der nahegelegenen Schweissstelle bei, wodurch auch die gewünschte höhere Biegefestigkeit gegenüber einer ebenen Bandelektrode erreicht wird. Dies ist, wie bereits weiter oben erwähnt, von grossem Vorteil beim Unterpulverschweissen, wenn die zur Schweissrichtung quer gestellte Elektrode durch das Schweisspulver geführt wird und sie zufolge ihrer Steifigkeit vom Schweisspulver nicht aus ihrer vorbestimmten Lage gebogen werden kann.

Es ist im Rahmen der Erfindung denkbar zwei Formbacken 17a, 17b anzubringen, die linienförmig in Kantennähe an der Bandelektrode anliegen. Dies kann unter gewissen Umständen die Wölbung der Bandelektrode erleichtern.

Ein Schweisskopf für das Schweissen mit zwei Bandelektroden 18, 19, die sich gegenseitig mit ihrer Breitseiten vollkommen überlappen, besitzt eine für beide Bandelektroden gemeinsame Vorschubeinrichtung mit zwei zylindrischen Rollen 20, 21. Es ist im Rahmen der Erfindung auch denkbar, dass jede Bandelektrode von einer eigenen Vorschubeinrichtung vorgeschoben wird, was gegebenenfalls mit zwei verschiedenen Geschwindigkeiten erfolgen kann, wenn z.B. die beiden Bandelektroden aus verschiedenen Legierungen bestehen, die unterschiedliche Abschmelzgeschwindigkeiten erfordern.

Die Bandelektroden werden der Kontakteinrichtung 22 zugeführt, die ein für die Elektroden gemeinsames Kontaktstück 23 besitzt, der mit rinnenförmigen Bandführungen 24, 25 versehen ist. Im übrigen ist die Kontakteinrichtung ähnlich derjenigen, wie sie oben für eine Bandelektrode beschrieben wurde. Jede der beiden Formbacken 26, 27 ist einer Bandführung 24, 25 gegenübergestellt und bewirkt zusammen mit dem Kontaktstück die rinnenförmige Wölbung der Bandelektroden 18, 19. In beiden Bandführungen sind Reinigungsnuten 28, 29 eingefräst, wie dies beim Kontaktstück 4 (Fig. 4) beschrieben wurde.

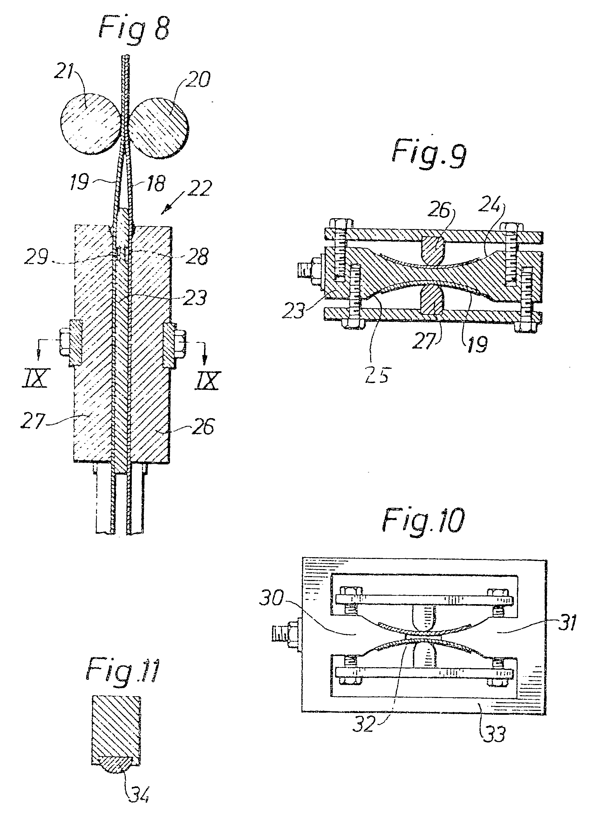

Wenn die beiden Bandelektroden möglichst nahe aneinander anliegend der Schweissstelle zugeführt werden sollen, wird ein geteiltes Kontaktstück (Fig. 10) mit zwei durch einen Spalt 32 getrennten Hälften 30, 31 verwendet, die durch ein Joch 33 verbunden sind.

Es ist auch möglich, mehrere mit ihren Breitseiten dicht aneinander liegende Bandelektroden durch die Kontakteinrichtung 4 (Fig. 1 bis Fig. 3) vorzuschieben, in der alle Elektroden gleichartig rinnenförmig gewölbt werden.

Die Formbacken dienen bei den oben beschriebenen Schweissköpfen als Andrück- und Führungsvorrichtung. Wegen des linienförmigen Anliegens an der Elektrode werden sie im Anliegebereich stark auf Verschleiss beansprucht. Die Formbacken werden daher zur Gänze aus verschleissfestem Material oder nur im Anliegebereich mit einem Einsatz (Fig. 11) aus einem derartigen Material, z.B. gehärtetem Stahl, Aluminiumoxid, hergestellt. Da die Formbacke nicht als stromführender Kontakt dient, ist es zweckmässig, diese vom Kontaktstück elektrisch zu isolieren um eine Elektroerosion an der Anliegefläche zu vermeiden.

Die Schweissköpfe gemäss der vorliegenden Erfindung können sehr billig hergestellt werden. Die Bandführung ist vorteilhafterweise ein Teil einer Zylindermantelfläche. Beispielsweise wurde die Bandführung des Kontaktstückes eines Schweisskopfes für eine Bandelektrode aus rostfreiem Stahl mit einem Querschnitt 60 × 0,5 mm als Zylindermantelfläche mit einem Radius von 125 mm ausgeführt.

## Patentansprüche

1. Schweisskopf mit einer Vorschubeinheit mit zylindrischen Rollen (2, 3) für den Vorschub von zumindest einer Bandelektrode (1; 18, 19) durch eine Kontakteinrichtung für die Überführung von Schweissstrom zur Bandelektrode, dadurch gekennzeichnet, dass die Kontakteinrichtung mit einem Kontaktstück (5; 23), das eine rinnenförmige Bandführung (7; 24, 25) für die Bandelektrode (1; 18, 19) besitzt, und mit einer gegenüber der Bandführung und im Abstand von dieser angebrachten, an der Bandelektrode anliegenden Formbacke (8; 26, 27) versehen ist, die im Zusammenwirken mit der Bandführung die von der Vorschubeinheit (2, 3; 20, 21) in ebener Form vorgeschobene Bandelektrode bei Passage der Bandführung zu einer in der Bandführung anliegenden, mit der Längsachse der Bandelektrode gleichlaufenden Rinne verformt, wobei die Rinnenform der Bandführung und der genannte Abstand derart bemessen sind, dass die Verformung der Bandelektrode um ihre Längsachse elastisch ist.

2. Schweisskopf nach Patentanspruch 1, dadurch gekennzeichnet, dass die Formbacke (8) bezüglich der Bandführung (7; 24, 25) symmetrisch angebracht ist, und im wesentlichen linienförmig in Richtung der Bandführung an der Bandelektrode (1) anliegt.

3. Schweisskopf nach Patentanspruch 1 oder 2 mit einer Vorschubeinheit für den Vorschub von zwei Bandelektroden, die sich mit ihren Breitseiten zumindest teilweise überlappen, dadurch gekennzeichnet, dass das Kontaktstück (23) mit zwei parallelen, rinnenförmigen Bandführungen (24, 25) versehen ist, die mit ihren konvexen Seiten zueinander gewandt sind, und dass eine Formbacke (26, 27) pro Bandführung angebracht ist.

4. Schweisskopf nach Patentanspruch 1–3, dadurch gekennzeichnet, dass das Kontaktstück (5; 23) im Bereich der Bandführung (7; 24, 25) mit einem Kanal (12, 13; 28, 29) versehen ist, der sich bis zu einer Öffnung ausserhalb der Bandführung erstreckt.

5. Schweisskopf nach Patentanspruch 4, dadurch gekennzeichnet, dass als Kanal eine Nut (12; 28, 29) dient, die sich von der Bandführung in der Vorschubrichtung der Bandelektrode im Kontaktstück schräg nach vorne erstreckt.

6. Schweisskopf nach Patentanspruch 4, dadurch gekennzeichnet, dass als Kanal ein das Kontaktstück (15) durchdringender Schlitz (13) dient, der quer zur Bandführung angebracht ist.

7. Schweisskopf nach Patentanspruch 1–6, dadurch gekennzeichnet, dass die Formbacke aus verschleissfestem Material besteht.

8. Schweisskopf nach Patentanspruch 1–7, dadurch gekennzeichnet, dass die Formbacke vom Kontaktstück elektrisch isoliert ist.

## Revendications

1. Tête de soudage comportant un système d'avance à rouleaux cylindriques (2, 3) pour commander l'avance d'au moins une électrode en ruban (1; 18, 19), et faire passer celle-ci à travers un dispositif de contact qui assure le passage du courant de soudage jusqu'à l'électrode en ruban; cette tête étant caractérisée en ce que le dispositif de contact comporte une pièce de contact (5; 23) pourvue d'un évidement profilé en gouttière (7; 24, 25), pour guider l'électrode en ruban (1; 18, 19) le dispositif de contact comportant également un patin de profilage (8; 26, 27), disposé à une certaine distance en regard de l'évidement profilé de guidage pour s'appliquer sur l'électrode en ruban; le patin de profilage coopérant avec l'évidement profilé de guidage pour déformer l'électrode en bande plate poussée par le système d'avance (2, 3; 20, 21), afin de donner à l'électrode en ruban la forme d'une gouttière dont l'axe coïncide avec l'axe longitudinal du ruban, et dont le profil correspond à celui de l'évidement profilé de guidage; les cotes du profil en gouttière de l'évidement de guidage, et l'écartement du patin de profilage par rapport à cet évidement, étant choisis pour assurer suivant l'axe longitudinal de l'électrode en ruban une déformation élastique de celle-ci.

2. Tête de soudage selon la revendication 1, caractérisée en ce que le patin de profilage (8) est disposé de manière symétrique par rapport à l'évidement profilé de guidage, et se trouve en appui sur l'électrode en ruban (1), suivant une plage sensiblement rectiligne orientée dans le sens de l'évidement de guidage du ruban.

3. Tête de soudage selon l'une des revendications 1 ou 2, comportant un système d'avance pour commander l'avance de deux électrodes en ruban qui se recouvrent au moins en partie dans le sens de leur largeur, caractérisée en ce que la pièce de contact (23) est pourvue de deux évidements de guidage (24, 25), parallèles et profilés en gouttière, ces deux évidements ayant leurs profils opposés dos à dos, et un patin der profilage (26, 27) étant prévu pour chaque évidement profilé de guidage d'une électrode en ruban.

4. Tête de soudage selon l'une des revendications 1 à 3, caractérisée en ce que la pièce de contact (5; 23), dans la zone de l'évidement profilé de guidage (7; 24, 25), est pourvue d'un canal (12, 13; 28, 29) qui débouche à l'extérieur par un orifice en dehors de la zone de guidage de l'électrode en ruban.

5. Tête de soudage selon la revendication 4, caractérisée en ce que le canal est constitué par une rainure (12, 28, 29) ménagée sur l'évidement profilé de guidage de la pièce de contact, cette rainure étant orientée obliquement par rapport au sens de progression de l'électrode en ruban.

6. Tête de soudage selon la revendication 4, caractérisée en ce que le canal est constitué par une fente (13) orientée transversalement par rapport au sens de guidage de la bande, et qui traverse la pièce de contact (15).

7. Tête de guidage selon l'une des revendications 1 à 6, caractérisé en ce que le patin de profilage est constitué d'une matière à l'épreuve de l'usure.

8. Tête de soudage selon l'une des revendications 1 à 7, caractérisée en ce que le patin de profilage est isolé électriquement par rapport à la pièce de contact.

**Claims**

1. Welding head with a feed unit having cylindrical rollers (2, 3) for feeding at least one strip electrode (1; 18, 19) through a contact device for transferring the welding current to this electrode, characterised in that the contact device is provided with a contact piece (5; 23) which possesses a trough-shaped strip guide (7; 24 ,25 ) for the strip electrode (1; 18, 19) and with a shaping pad (8; 26, 27) fitted opposite the strip guide and with a clearance therefrom and bearing against the strip electrode, said strip electrode, which is advanced in a flat condition by the feed unit (2, 3; 20, 21) being deformed during its passage through the strip guide by the shaping pad in cooperation with the strip guide to form a trough, which is parallel to the longitudinal axis of the strip electrode and in close contact with the strip guide, the trough-shape of which and said clearance being dimensioned such that the strip electrode is elastically deformed about its longitudinal axis.

2. Welding head according to Claim 1, characterised in that the shaping pad (8) is fitted symmetrically with respect to the strip guide (7; 24, 25) and is essentially in line contact with the strip electrode (1) in the direction in which the strip is guided.

3. Welding head according to Claim 1 or 2, with a feed unit for feeding two strip electrodes, the flat sides of which overlap at least partially, characterised in that the contact piece (23) is provided with two parallel trough-shaped strip guides (24, 25) the concave surfaces of these guides facing in opposite directions, and in that one shaping pad (26, 27) is fitted per strip guide.

4. Welding head according to Claims 1 to 3, characterised in that the contact piece (5; 23) is provided, in the region of the strip guide (7., 24, 25) with a channel (12, 13; 28, 29) extending to an opening located outside the strip guide.

5. Welding head according to Claim 4, characterised in that a groove (12; 28, 29) serves as the channel, this groove extending obliquely forwards from the strip guide in the direction in which the strip electrode is advanced in the contact piece.

6. Welding head according to Claim 4, characterised in that a slot (13) serves as the channel, this solt being made at right angles to the direction in which the strip ist guided an passing through the contact piece (15).

7. Welding head according to Claims 1 to 6, characterised in that the shaping pad is made of a wear-resistant material.

8. Welding head according to Claims 1 to 7, characterised in that the shaping pad is electrically insulated from the contact piece.

Fig.1

Fig.2

Fig.4

Fig.3

Fig.5

Fig.6

Fig.7

2/2

**Fig 8**

**Fig.9**

**Fig.10**

**Fig.11**